(19) Europäisches Patentamt
European Patent Office
Office européen des brevets

(11) Publication number: **0 161 659**
**B1**

(12) # EUROPEAN PATENT SPECIFICATION

(45) Date of publication of patent specification: **07.03.90**

(51) Int. Cl.[5]: **G 01 N 30/48,** C 03 C 12/00, C 03 C 17/30, B 01 D 15/08

(21) Application number: **85105871.9**

(22) Date of filing: **13.05.85**

(54) **Use of porous glass separation medium for high performance liquid chromatography.**

(30) Priority: **12.05.84 JP 95380/84**
**27.10.84 JP 226593/84**
**27.10.84 JP 226594/84**

(43) Date of publication of application:
**21.11.85 Bulletin 85/47**

(45) Publication of the grant of the patent:
**07.03.90 Bulletin 90/10**

(84) Designated Contracting States:
**DE FR GB**

(56) References cited:
**GB-A-1 506 226**
**US-A-3 758 284**
**US-A-3 956 179**
**US-A-4 052 010**

(73) Proprietor: **FUJI PHOTO FILM CO., LTD.**
**210 Nakanuma Minami Ashigara-shi**
**Kanagawa 250-01 (JP)**

(72) Inventor: **Murakami, Yukio**
**12-1, Ogi-cho 2, Odawara-shi**
**Kanagawa (JP)**
Inventor: **Taguchi, Yooichi**
**2-26-30, Nishi-azabu**
**Minato-ku Tokyo (JP)**
Inventor: **Suzuki, Seiji**
**No. 210, Nakanuma**
**Minami-ashigara-shi Kanagawa (JP)**

(74) Representative: **Kraus, Walter, Dr. et al**
**Patentanwälte Kraus, Weisert & Partner**
**Thomas-Wimmer-Ring 15**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to the use of a porous particulate sodium borosilicate glass as separation medium in high performance liquid chromatography.

The high performance liquid chromatography (hereinafter referred to as "HLC") shows high resolution power involving a short time of a measurement period and accordingly has been employed in a wide variety of chemical fields as a valuable separation technique. Particularly, HLC has been widely utilized in the field of analytical chemistry. Recently, HLC has been further utilized for the purpose of resolution of synthetic polymers of different molecular weights, separation of various natural protens, separation of blood protein present in a living body, separation of hormones, separation of enzymes, separation of nucleic acids, and separation of pharmaceuticals, as well as for other separation purpose in the field of biochemistry. Thus, HLC has been widely applicable to various arts. In what follows, 1 angstrom=$10^{-10}$ m.

Since the high performance liquid chromatography is of value as analytical technique, it has been under study for improvements in regard of separation rate, resolution power, etc. For these purposes, the following subjects and conditions have been studied: (1) procedure for charging (packing) the separation medium into a column; (2) high-pressure liquid supplying part; (3) separation column; (4) detection part; (5) conditions of elution; etc.

In the above subjects, the improvement of separation column is generally based on improvement of the separation medium. Representative properties required for satisfactory HLC separation medium are described below.

(1) The pore size should be well controlled.

In the known gel permeation chromatography (hereinafter referred to as "GPC") which is one embodiment of HLC and functions utilizing the molecular sieve effect, whether a solute enters inside of the pore of particle or not is determined by the relative value of size of the solute molecule to the pore size of the fixed particle. The different affinities of solutes provide a certain time lag of elution time, whereby the solutes are eluted in sequence of size of molecule, that is, from a solute of big molecule to a solute of small molecule. Particularly, in the case that the division of mixture of various compounds such as those from low molecular weight compounds such as amino acids or oligomers up to synthetic polymers or polypeptides is intended, the pore size of the separation medium should be well controlled over a wide range according to the range of the varying molecular weight. On the contrary, the pore size should be distributed sharply within a narrow range, if the solutes are compounds whose molecular weight are very near to each other.

Therefore, the control of the pore size over a wide range as well as the sharp distribution of the pore size within a narrow range are important factors defining the quality of the separation medium for GPC.

(2) The size of particle should be small and the particle preferably is spherical.

As the parameter indicating width of the peak in HLC, the number of theoretical plates (N) according to the following equation is employed.

$$N=16\ (Ve/W)^2$$

(Ve: volume of elution at peak, W: width of peak).

The greater N is, the higher the separation ability of the column is.

If the size of the particle is decreased, the diffusion (entering) of solute inside of the particle is attained in a shorter time, as well as the retention period is also shortened, whereby W is made smaller. If the distribution of particle size is made sharp simultaneously with the above decrease of the particle size, the value of N increases. This is because a wider particle size distribution allows production of separating area between the big particles and the small particles in the column. The value of Ve can be increased by increase of the pore volume and increase of porosity.

Moreover, it is important to make the particles spherical. The space between particles can be reduced by the use of the spherical particles, whereby the retainable volume is increased, the flow of moving liquid is made uniform, and occurrence of vortical flow and abnormal flow can be avoided.

(3) The separation medium should be in the form of stable hard gel.

In the case that the size (diameter) of the particle of the separation medium for HLC is made smaller for enhancement of the separation ability, the pressure loss increases. Accordingly, high pressure is required to keep the flow rate at a certain level. In view of the applied high pressure, the separation medium should be physically strong to avoid deformation and physical damage. Further, the separation medium should be chemically stable so as to avoid swelling, shrinking and deterioration of the particles.

As the conventional separation medium for HLC, a hard medium such as silica gel or a porous particulate glass, a semi-hard medium such as a particulate polystyrene, or a soft medium such as a particulate polyacrylamide or a polysaccharide gel is available on market and is employed.

Among these, the soft gel appears disadvantageous because it likely suffers from swelling, shrinking and deformation under pressure. The semi-hard medium is employed generally for the use in combination

with an organic solvent. Thus, the typical semi-hard medium is difficultly employable in combination with water unless a specific surface modification is applied to the medium, and there brings about a limitation to the employable solvent. The silica gel has drawbacks in that the pore size is controllable only within a narrow range such as below approx. 500 angstroms, and a particle of big pore size is hardly produced. Moreover, the silica gel is not appropriate for the use in GPC for separating substances having adjacent molecular weights, because it generally shows a poor (i.e., wide) pore size distribution.

As a separation medium having excellent pore characteristics, being free from the drawbacks of silica gel, a porous particulate glass medium has been known. Generally employed processes for the preparation of the porous particulate glass medium are described, for instance, in US—A—2 106 744, US—A—2 221 709, US—A—3 549 524 and US—A—3 758 284. Further, the process is described in "Papers on Membrane (in Japanese)" *4* (4) 221—227 (1979) and "Gel Permeation Chromatography of Huge Particles (in Japanese)" 3—18 (1980). These processes, however, produce porous particulate glass having a mean size of more than approx. 30 μm. Such relatively big particles are not appropriate for the use as separation medium in HLC.

US—A—4 052 010 describes an aqueous suspension of porous glass particles having a closely controlled average particle size within the range of about 0.7 to about $3.0 \times 10^{-6}$ m (microns). This suspension of porous glass particles has been found very suitable for immobilizing antibodies to produce immobilized antibodies which can be used in the SPIRA of numerous substances.

US—A—3 956 179 and GB—A—1 506 226 describe the treatment of glass particles with a silane coupling agent.

The object of the present invention is to provide a porous glass separation medium appropriately employable in the high performance liquid chromatography.

The present invention resides in the use of a porous particulate sodium borosilicate glass of $SiO_2$—$B_2O_3$—$Na_2O$ having a mean diameter of 0.1 to 30 μm and a mean pore size ranging from 80 to 3000 angstroms, wherein the distribution of pore size on the basis of accumulating 10%, 90% point is within ±35% as separation medium in high performance liquid chromatography.

The above-described porous glass separation medium can be advantageously prepared by phase-separating a sodium borosilicate of $SiO_2$—$B_2O_3$—$Na_2O$ by heat treatment and removing at least a portion of an acid-dissoluble phase to obtain porous glass particles and subjecting the obtained glass particles to pulverization and classification.

Fig. 1 is a graph showing an example of elution curve observed in a high performance liquid chromatography of absorption mode using a separation medium of the present invention.

Fig. 2 is a graph showing an example of elution curve observed in a high performance liquid chromatography of GPC mode using a separation medium of the present invention.

Fig. 3 is a graph showing an example of elution curve observed in a high performance liquid chromatography using a separation medium of the present invention.

Fig. 4 is a graph showing an example of calibration curve observed in a high performance liquid chromatography using a separation medium of the present invention. The calibration curve indicates a relationship between molecular weight and volume of elution.

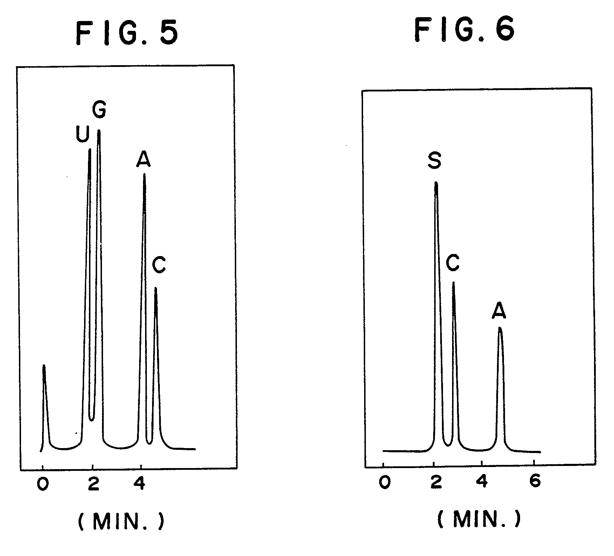

Each of Figs. 5 and 6 is a graph showing an example of elution curve observed in a high performance ion exchange chromatography of absorption mode using a separation medium of the present invention.

The porous glass used in the present invention comprises sodium borosilicate of three-component type consisting of $SiO_2$, $B_2O_3$ and $Na_2O$, and the porous glass can be prepared utilizing phase-separation technique. The preparation of a porous particulate sodium borosilicate glass of the above-mentioned three component type has been described in prior arts. Therefore, only a representative example of the process for the preparation thereof is given below.

A mixture of the starting materials, namely $SiO_2$, $B_2O_3$ and $Na_2O$ is placed in a platinum crucible and heated to 1,300—1,450°C to melt. The molten product is rapidly cooled to room temperature and then is subjected to phase separation under heating at 500—700°C. The phase separation causes separation of a $SiO_2$-rich phase from a $B_2O_3$—$Na_2O$ rich phase inside of the molten product. In the course of the separation, these phases are intermingled with each other to form an intermingling structure. The size of each separated phase can be adjusted by controlling the temperature and period of the heating phase separation. After the heat treatment is complete, the product is cooled and crushed in a crushing machine to give particles having a diameter of approx. 50 μm. The acid-soluble $B_2O_3$—$Na_2O$-rich phase is then treated with an inorganic acid such as hydrochloric acid under heating (e.g., approx. 90°C). The $B_2O_3$—$Na_2O$-rich phase is dissolved out to give a $SiO_2$ skeleton structure having a great number of micropores. In the micropores a colloidal silica remains, and accordingly a portion of the micropores is closed. The colloidal silica is then dissolved out by treating the structure with an aqueous alkaline solution (e.g., 1/2N aqueous NaOH). The micropores are washed successively with water and an acid, and this washing procedure is repeated. Thus, a porous glass is obtained.

It is noted that the prior arts utilizing the above process are silent with respect to the preparation of porous particulate glass having a diameter of not more than 30 μm. The reason may reside simply in that no such trial have been made. However, it reasonably appears that the porous particulate glass having a mean diameter of not more than 30 μm is difficulty prepared by the heretofore described procedures. In the

above-described process, fine particles having a diameter of not more than 30 μm are dissolved out simultaneously with the removal of colloidal silica in the treatment with an aqueous alkali solution.

It has been now discovered by the present inventors that a combination of pulverization and classification can be applied to the porous glass particles prepared in the above manner, whereby producing a porous particulate glass having a mean diameter of approx. 0.1—30 μm, preferably 1—10 μm. Thus produced fine particulate is advantageously employable as the HLC separation medium.

The procedures for the pulverization and classification employable for the above purpose are described below.

The porous glass prepared in the aforementioned known manner is in the first place ground finely, for instance, in an impact type pin mill. The pin mill is preferably made of hard wearing ceramics-lined zirconia at the surface to contact the glass particles, whereby contamination of the particles with a metal powder is prevented. The metallic pin mill wears easily and likely contaminates the glass particles. The metal powder mixed in the porous glass particles is hardly removed even by a powerful magnetic separator.

The finely ground particles are roughly classified in a centrifugal air classifier. Although the simple classification using an air classifier is not enough for producing the fine particles having an appropriate size distribution for the use as the HLC separation, such rough classification is advantageous to effect the subsequent levigation efficiently.

The levigation is then performed. The classification according to the levigation is based on the known Stokes' Sedimentation Law. The levigation is performed in several times or around ten times. The dispersing medium preferably is water. If necessary, a thickener such as glycerol or polyethylene glycol is added to the medium to control the rate of sedimentation. The dispersibility of the particles can be enhanced by addition of a sodium hexa-m-phosphate, sodium pyrophosphate or a surfactant such as sodium dodecylsulfate. The particles are finally washed with water and dried to give the desired porous particulate glass.

The porous particulate glass produced by the above-described pulverization and classification has, for instance, the following physical and chemical properties.

(1) Pore characteristics

1) Range of mean pore size (diameter): 80—3,000 angstroms (within this range, particles of an optionally selected diameter can be produced).

2) Distribution of pore size (on the basis of accumulating 10, 90% point is: ≤±15%.

3) Pore volume: approx. 0.8 ml/g.

4) Relative surface area: approx. 10—250 $m^2$/g.

(2) Distribution of particle size

1) Mean particle size (diameter): 0.1—30 μm.

2) Distribution of particle size (on the basis of accumulating 10, 90% point is: ≤±35%.

(3) Other Physico-chemical properties

1) Chemical composition:

| | | |
|---|---|---|
| | $SiO_2$ | 92 wt.% |
| | $B_2O_3$ | 7 wt.% |
| | $Na_2O$ | <1 wt.%. |

2) True specific gravity: 2.2.

3) Bulk specific gravity: 0.50.

4) Silanol group content: approx. 1.5 μm/$m^2$ (calculated value based on an amount of methylred absorption in toluene).

5) Heat resistance: employable up to 600°C.

6) Coefficient of linear thermal expansion: $8\times10^{-7}$ cm/cm · °C (up to 600°C).

The above-identified porous particulate glass has silanol groups of approx. 1.5 μmol./$m^2$ on the surface, which provides the particulate glass with an absorption activity. For this reason, the porous particulate glass can be employed in a high performance liquid chromatography of an absorption mode. Moreover, the porous particulate glass can be employed in an HLC of a GPC mode.

The porous particulate glass separation medium as prepared in the above pulverization and classification procedure can be further treated with a silane coupling agent on the surface. The silane coupling agent is applied to the surface for rendering the surface hydrophilic or hydrophobic.

A variety of silane coupling agents are known as the silane coupling agents for treating a glass surface. The known silane coupling agents can be optionally employed in the treatment of the invention.

For instance, γ-glyoxypropyltrimethoxysilane is generally employed for the hydrophilic surface modification. This silane coupling agent undergoes coupling reaction with the silanol groups on the surface of the porous particulate glass in water, so as to mask (or cap) the silanol groups. Simultaneously with the capping of the silanol groups having high absorbing power, the silane coupling agent as such is cleaved at the glyoxide group. Thus, the porous particulate glass is made hydrophilic for advantageous employment as the separation medium for HLC process. In more detail, the amount of the silanol group remaining on the surface after the silane coupling treatment is reduced to approx. 2—3%. The presence of such a small amount of silanol groups does not disturb the characteristics of the HLC separation medium.

As the modification for rendering the surface hydrophobic, a modification method using dimethyl octadecylmonochlorosilane $\{(CH_3)_2ClSi(C_{18}H_{37})\}$ can be mentioned. The dimethyloctadecylmonochlorosilane reacts with the silanol groups on the surface of the porous particulate glass to mask the remaining silanol groups with the trimethylchlorosilane group. This treatment can be applied to the porous particulate glass to reduce the amount of the remaining silanol group to approx. 4—5%. Accordingly, it is advantageously employable as a separation medium for a reversed partition high performance liquid chromatography.

Further examples of the silane coupling agent for rendering the surface hydrophilic include dimethyl - γ - glyoxypropylmethoxysilane, 3 - aminopropyltrimethoxysilane, γ - (2 - aminoethyl)aminopropyltrimethoxysilane, 3 - cyanopropyltrichlorosilane, 3 - (4 - nitrophenyl)propyltrichlorosilane, and 3 - mercaptopropyltrimethoxysilane.

Further examples of the silane coupling agent for rendering the surface hydrophobic include octadecyltrichlorosilane, methyloctadecyldichlorosilane, octadecyltriethoxysilane, octyltrichlorosilane, dimethyloctylchlorosilane, octyltriethoxysilane, butyltrichlorosilane, dibutyldichlorosilane, propyl trichlorosilane, ethyltrichlorosilane, ethyltriethoxysilane, dichlorodimethylsilane, chlorotrimethylsilane, hexamethyldisilazane, phenyltrichlorosilane, diphenyldichlorosilane, 3 - phenylpropyltrichlorosilane, vinyltrimethoxysilane, and 3,3,3 - trifluoropropyltrimethoxysilane.

The porous particulate glass separation medium as prepared in the aforementioned pulverization and classification procedure can be provided with an ion exchange group (e.g., cation exchange group or anion exchange group) on the surface. The resulting separation medium is preferably employed in a high performance ion exchange chromatography.

Generally, the porous particulate glass has silanol groups on the surface. For this reason, it is preferable that the particulate glass is initially treated with a silane coupling agent and then is treated to provide an ion exchange group such as a cation exchange group or an anion exchange group on the surface. The treatment of the surface of the particle with a silane coupling agent can be performed in the above-described manner.

An ion exchange group can be introduced on the surface of the particle in a known manner for the introduction of the ion exchange group on the surface of an inorganic particle.

Examples of the ion exchange group include the following groups:

$-(CH_2)_n-Bz-SO_3Na$ [n is an integer of 1 to 3 and Bz indicates a benzene ring. The same is applied to the following formula]

$-(CH_2)_n-SO_3Na$

$-(CH_2)_n-NH(CH_2)_2-SO_3Na$

$-(CH_2)_n-CO_3Na$

$-(CH_2)_n-NH(CH_2)_2-CO_2Na$

$-(CH_2)_3-OCH_2CH(OH)CH_2OCH_2CO_2Na$

$-(CH_2)_n-NHCO(CH_2)_2-CO_2Na$

$-(CH_2)_3-OCH_2CH(OH)CH_2NH(OCH_2)_2SO_3Na$

$-(CH_2)_n-N^+R^1R^2R^3$ [$R^1$, $R^2$ and $R^3$ indivisually represent $CH_3$, $C_2H_5$, $C_3H_7$, $Bz-CH_2-$, $Bz-$, or the like]

$-(CH_2)_n-N^+HR^1R^2$ [$R^1$ and $R^2$ indivisually represent $CH_3$, $C_2H_5$, $C_3H_7$, $Bz-CH_2-$, $Bz-$, or the like]

$-(CH_2)_3-OCH_2CH(OH)CH_2NR$ [R is $CH_3$, $C_2H_5$ or the like]

The separation medium of the present invention can be packed into a column by the conventional wet-slurry method.

The present invention is further described by the following examples.

Example 1

Silica sand, boric acid and sodium nitrate were mixed uniformly in a ball mill to give 80 kg. of a starting material mixture in which the material were contained in the amount of oxide basis of $SiO_2$=60.3 wt.%, $B_2O_3$=30.0 wt.% and $Na_2O$=9.7 wt.%. The starting material mixture was placed in a platinum crucible and heated under stirring to 1,350°C in an electric furnace for 10 hrs. The molten product was quickly cooled to room temperature and then was heated at 550°C for 96 hrs. for phase separation. Thus treated product was roughly crushed in a cross beater mill and sieved to adjust the particle size within 80—400 mesh. The product was then treated with 3N hydrochloric acid at 90°C for 24 hrs. and washed with water. The product was further treated with 1/2N aqueous sodium hydroxide solution at 20—25°C for 2 hrs. for removing colloidal silica.

The alkali solution was removed from the product by washing it with water. The product was then washed with 1N hydrochloric acid at room temperature for 2 hrs., and again washed with water until the water employed for the washing showed pH 7. The product was dried at 100°C to give porous glass particles.

Thus obtained porous glass particles showed the following characteristic values: mean pore size 170 angstroms, relative pore volume 0.81 ml/g, pore size distribution +21/−15%, relative surface area 162 $m^2/g$, and silanol group 227 μmol./g.

The pore values, relative surface area and the content of silanol group were measured by the mercury penetration method, B.E.T. method and methylred absorption method, respectively.

The above porous glass particles were finely ground in an impact-type pin mill and classified in an air classifier at the classification points of 4.0 μm and 6.0 μm.

The collected particles were then subjected to levigation. The levigation was repeated 10 times under the conditions that the sedimentation depth (height) 10 cm, and sedimentation period 1.5 and 2.0 hrs. The dispersing medium was pure water. Finally, the processed particles were dried at 100°C under vacuum to give the desired porous particulate glass. The particle characteristics of the obtained porous particulate glass were as follows: mean particle size ($D_{50}$)=5.0 μm, particle size distribution ($D_{90}/D_{50}$)=1.30, and particle size distribution ($D_{50}/D_{10}$)=1.31.

The obtained porous particulate glass was employed for a high performance liquid chromatography of an absorption mode under the following conditions.

Sample: nitrobenzene—o-cresol—p-cresol mixture (1:1:1, by weight).

Column size: 4.6 mm (diameter)×150 mm (length).

Eluent: methylene chloride (saturated with 50% water).

Flow rate: 1.0 ml/min.

The chart obtained in the procedure is given in Fig. 1, in which the peak numbers 1, 2 and 3 indicate peaks of nitrobenzene (1), o-cresol (2), and p-cresol (3), respectively.

As is apparent from the Fig. 1, the high performance liquid chromatography of an absorption mode using a porous particulate glass separation medium of the present invention is appropriate to divide a mixture of compounds having similar molecular weights and/or similar chemical structures.

Example 2

The porous particulate glass separation medium prepared in Example 1 was employed for a high performance liquid chromatography of a GPC mode under the following conditions.

Sample: DMP adenine—blue dextrane mixture (2:1, by weight).

Column size: 4.6 mm (diameter)×150 mm (length).

Eluent: 0.1M sodium phosphate buffer (pH 7.0)+6M guanidine hydrochloride.

Flow rate: 1.0 ml/min.

The chart obtained in the procedure is given in Fig. 2, in which the peak symbols A and B indicate peaks of DMP andenine (A) and blue dextrane (B), respectively.

As is apparent from the Fig. 2, the high performance liquid chromatography of a GPC mode using a porous particulate glass separation medium of the present invention is appropriate to divide a mixture of compounds having similar molecular weights and/or similar chemical structures.

Example 3

The porous particulate glass separation medium prepared in Example 1 was treated to render the surface hydrophilic for the use in an aqueous phase GPC. The treatment was performed in the following manner.

The particles were activated on the surface by treatment with 0.2N nitric acid at 80°C for 3 hrs. The particles were cooled and washed with water until the washings showed pH of approx. 6.0. The particles were then dried at 120°C for several hours. In water containing a small amount of a surfactant, the particles and a commercially available γ-glyoxypropyltrimethoxysilane in the amount of approx. 5 times in equivalency per the silanol groups on the particles were heated at 90°C for 8 hrs. for performing a silane coupling treatment on the surface of particles. The particles were recovered, cooled, washed sufficiently with water, acetone and methanol, and dried at 60°C under vacuum ($10^{-2}$ Torr.). Thus treated porous particulate glass contained the remaining silanol group of approx. 3.0% per the amount of the silanol groups having been present on the surface with no silane coupling treatment. The value was measured by a methylred absorption method.

The glycerylated porous particulate glass obtained in the above treatment was easily packed into an HLC column by the conventional wet slurry method. The solvent of the slurry was a type for the use in a regular flow chromatography which was diluted with methanol as much as twice. The content of the particles were adjusted to approx. 10%. The pressure for charging (packing) the slurry was adjusted to 500 kg/cm$^2$. Each of the pressurized liquid and the parging liquid was employed in the amount of 20 times as much as the volume of the column.

A high performance chromatography using the column (7.24 mm (inner diameter)×250 mm) which was packed with the porous particulate glass separation medium was performed on ethylene glycol and polyethylene oxides under the following conditions.

Chromatography of ethylene glycol

Sample: aqueous ethylene glycol (1%).

Chart speed: 1 cm/min.

Flow rate: 0.5 ml/min.

Chromatography of polyethylene oxides

Sample: polyethylene oxide mixture containing polymers of different polymerization degrees.

Flow rate: 1.0 ml/min.

The results are illustrated in Fig. 3 and Fig. 4.

According to the results given in Fig. 3, the number of the theoretical plates was 9,600. Fig. 4 is a calibration curve on the molecular weight of polyethylene oxides vs. the volume of elution.

As is apparent from the results, the porous particulate glass separation medium treated with a silane coupling agent is advantageously employed in a high performance liquid chromatography.

Example 4

The porous particulate glass separation medium prepared in Example 1 was treated to provide a cation exchange group on the surface. The treatment was performed in the following manner.

5 g. of the particles was placed in 100 ml of dry dioxane containing 2 ml of 2-phenylethyltrichlorosilane. The dispersion was then refluxed under heating for 6 hrs., to introduce 2-phenylethyl groups on the surface of the glass particles. After the reaction was complete, the particles were successively washed sufficiently with water, acetone and methanol, and dried.

Thus treated porous particulate glass was introduced into 700 ml of chloroform containing 5 ml of chlorosulfonic acid. The dispersion was then refluxed under heating to introduce the sulfo groups on the surface of the particle. Thus, the particles having the strong cation exchange group [$-(CH_2)_2-$benzene ring$-SO_3Na$] were obtained.

The obtained porous particulate glass having the strong cation exchange group was employed for a high performance liquid chromatography under the following conditions.

Sample: uridine—guanosine—adenosine—cytidine mixture (1:1:1:1, by weight).

Column size: 4 mm (diameter)×150 mm (length).

Eluent: ethanol—water containing 10% of 0.05M $HCO_2NH_4$ (pH 4.7).

Flow rate: 1.0 ml/min.

Temperature: 50°C.

The chart obtained in the procedure is given in Fig. 5, in which the peak symbols U, G, A and C indicate peaks of uridine (U), guanosine (G), adenosine (A) and cytidine (C), respectively.

As is apparent from the Fig. 5, the high performance ion exchange liquid chromatography using a porous particulate glass separation medium having an ion exchange group on the surface is appropriate to divide a mixture of compounds having similar molecular weights and/or similar chemical structures.

Example 5

The porous particulate glass separation medium prepared in Example 1 was treated to provide an anion exchange group on the surface. The treatment was performed in the following manner.

5 g. of the particles was placed in 50 ml of dry dioxane containing 1.5 ml of 3-chloropropyltrichlorosilane. The dispersion was then refluxed under heating for 6 hrs., to introduce 3-chloropropyl groups on the surface of the glass particles. After the reaction was complete, the particles were successively washed sufficiently with water, acetone and methanol, and dried.

Thus treated porous particulate glass was introduced into 25 ml of chloroform containing 20 ml of diethylamine. The dispersion was then refluxed under heating. Thus, the particles having the strong anion exchange group

$$[-(CH_2)_3-N^+(CH_3)_2(C_2H_3)]$$

were obtained.

The obtained porous particulate glass having the strong anion exchange group was employed for a high performance liquid chromatography under the following conditions.

Sample: salicylamide—caffeine—aspirin mixture (1:1:1, by weight)

Column size: 4 mm (diameter)×150 mm (length).

Eluent: 0.05M $NaNO_3$ (pH 2.5).

Flow rate: 1.0 ml/min.

Temperature: 50°C.

The chart obtained in the procedure is given in Fig. 6, in which the peak symbols S, C and A indicate peaks of salicylamide (S), caffeine (C) and aspirin (A), respectively.

As is apparent from the Fig. 6, the high performance ion exchange liquid chromatography using a porous particulate glass separation medium having an ion exchange group on the surface is appropriate to divide a mixture of compounds having similar molecular weights and/or similar chemical structures.

**Claims**

1. Use of a porous particulate sodium borosilicate glass of $SiO_2-B_2O_3-Na_2O$ having a mean diameter of 0.1 to 30 μm and a mean pore size ranging from 80 to $3000\times10^{-10}$ m, wherein the distribution of pore size on the basis of accumulating 10%, 90% point is within ±35% as separation medium in high performance liquid chromatography.

2. Use as claimed in claim 1, wherein said particulate sodium borosilicate has been treated with a silane coupling agent on the surface.

3. Use as claimed in claim 1, wherein said particulate sodium borosilicate has ion exchange groups on the surface.

4. Use as claimed in any one of claims 1 to 3, wherein the mean diameter of said particulate sodium borosilicate ranges from 1 to 10 µm.

5. Use as claimed in any one of claims 1 to 4 wherein said particulate sodium borosilicate has a relative surface area of 10 to 250 $m^2/g$.

**Patentansprüche**

1. Verwendung eines porösen teilchenförmigen Natriumborosilikatglasses aus $SiO_2$—$B_2O_3$—$Na_2O$ mit einem mittleren Durchmesser von 0,1 bis 30 µm und einer mittleren Porengröße im Bereich von 80 bis $3000 \times 10^{-10}$m, dadurch gekennzeichnet, daß die Verteilung der Porengröße auf der Basis der Akkumulation des 10%, 90% Punkts innerhalb ±35% liegt als Separationsmedium für die hochauflösende Flüssigkeitschromatographie.

2. Verwendung nach Anspruch 1, dadurch gekennzeichnet, daß die Oberfläche des genannten teilchenförmigen Natriumborosilikats mit einem Kupplungsmittel des Silantyps behandelt wurde.

3. Verwendung nach Anspruch 1, dadurch gekennzeichnet, daß die Oberfläche des genannten teilchenförmigen Natriumborosilikats Ionenaustauschergruppen trägt.

4. Verwendung nach einem der Ansprüche 1 bis 3, dadurch gekennzeichnet, daß der mittlere Durchmesser des genannten teilchenförmigen Natriumborosilikats im Bereich von 1 bis 10 µm liegt.

5. Verwendung nach einem der Ansprüche 1 bis 4, dadurch gekennzeichnet, daß das genannte teilchenförmige Natriumborosilikat eine spezifische Oberfläche von 10 bis 250 $m^2/g$ besitzt.

**Revendications**

1. Utilisation d'un verre de $SiO_2$—$B_2O_3$—$Na_2O$ poreux particulaire au borosilicate de sodium ayant un diamètre moyen de 0,1 à 30 µm et une dimension moyenne de pores comprise dans la gamme de 80 à $3000 \times 10^{-10}$ m, dans lequel la distribution des dimensions des pores est comprise entre ±35% sur la base cumulée entre 10% et 90%, comme milieu séparateur dans une chromatographie liquide à haute performance.

2. Utilisation suivant la revendication 1, caractérisée en ce que la surface du borosilicate de sodium particulaire a été traitée avec un agent de couplage de type silane.

3. Utilisation suivant la revendication 1, caractérisée en ce que la surface du borosilicate de sodium particulaire a des groupes échangeurs d'ions.

4. Utilisation suivant l'une quelconque des revendications 1 à 3, caractérisée en ce que le diamètre moyen de ce borosilicate de sodium particulaire est dans la gamme de 1 à 10 µm.

5. Utilisation suivant l'une quelconque des revendications 1 à 4, caractérisée en ce que ce borosilicate de sodium particulaire présente une aire superficielle relative de 10 à 250 $m^2/g$.

FIG. 1

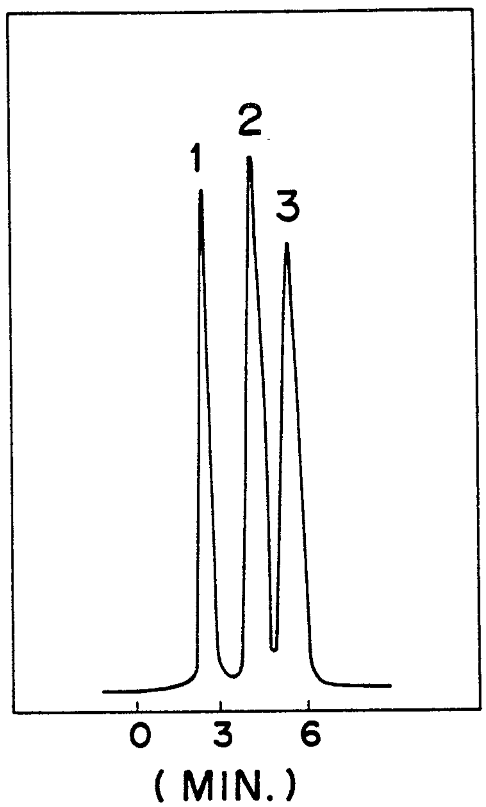


FIG. 2

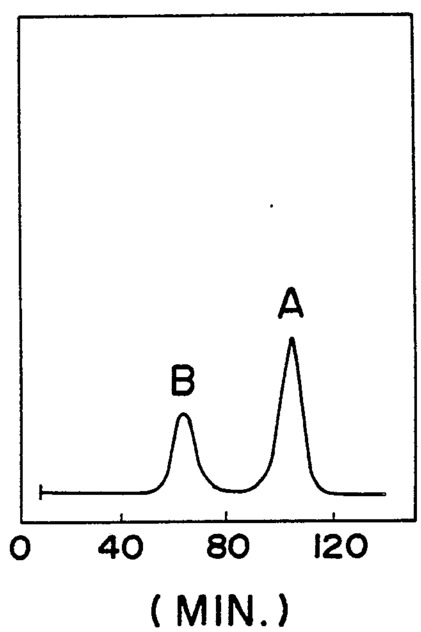

FIG. 3

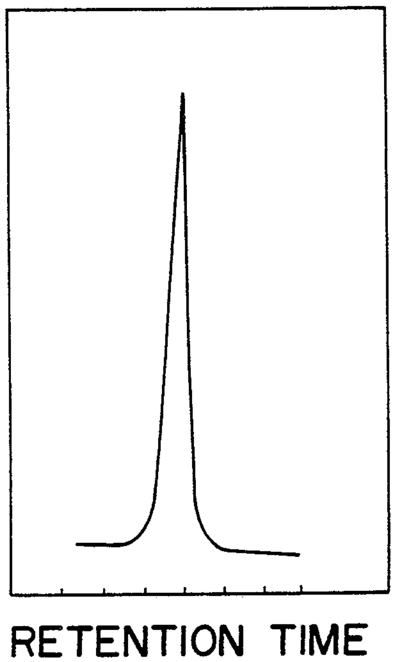
RETENTION TIME

FIG. 4

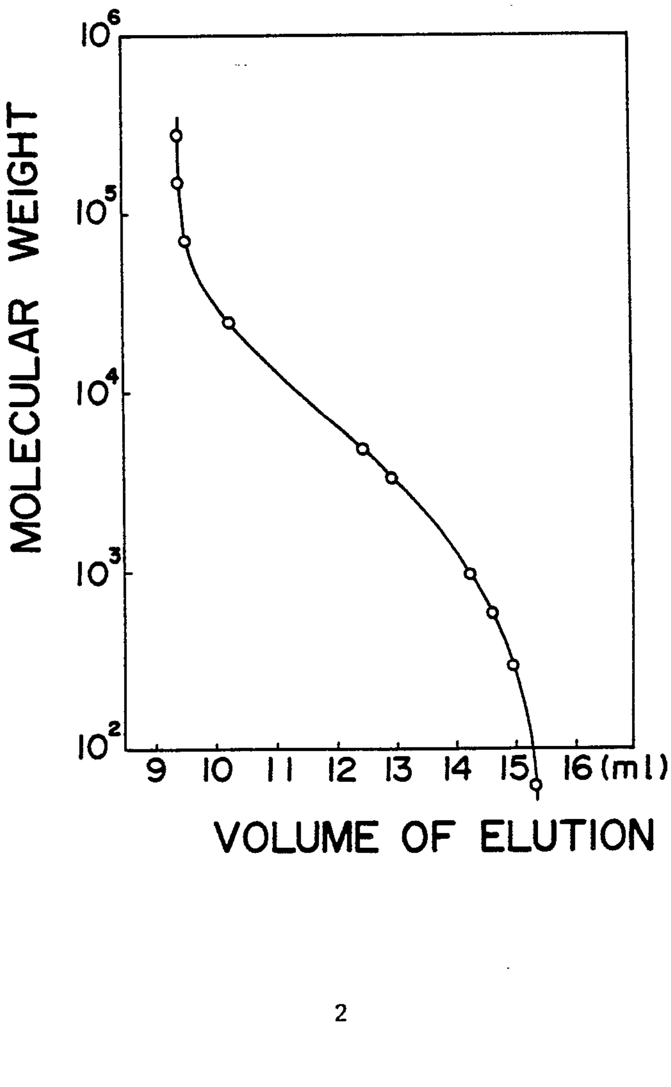
MOLECULAR WEIGHT
$10^6$
$10^5$
$10^4$
$10^3$
$10^2$
9 10 11 12 13 14 15 16 (ml)
VOLUME OF ELUTION

FIG. 5

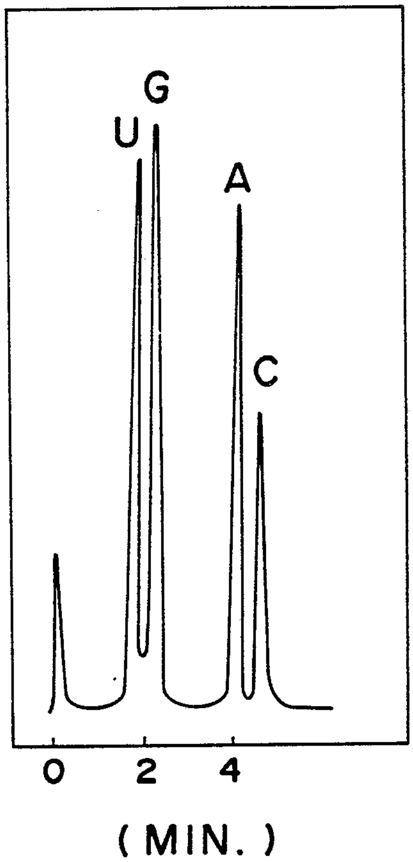


FIG. 6